# EUROPEAN PATENT SPECIFICATION

(11) **EP 1 061 814 B1**
(45) Date of publication and mention of the grant of the patent: **02.08.2006**
(21) Application number: 98910400.5
(22) Date of filing: 13.03.1998
(51) Int. Cl.: A23G 7/02, A23G 3/00, A23G 3/42, A23G 4/02, A23G 4/08

(54) **CONTINUOUS GUM BASE PROCESSING SYSTEM WITH COOLING TOWERS**
KONTINUIERLICHE VERARBEITUNGSANLAGE FÜR KAUGUMMI GRUNDMASSE MIT KÜHLTÜRMEN
SYSTEME DE TRAITEMENT EN CONTINU DE BASE DE GOMME UTILISANT DES TOURS DE REFROIDISSEMENT

(43) Date of publication of application: 27.12.2000
(73) Proprietor: Cadbury Adams USA LLC, Wilmington, DE 19808, (US)
(72) Inventor: DUGGAN, James, A., Machesney Park, IL 61115 (US); TEBRINKE, Kevin, Richard, Fort Madison, IA 52627 (US); PURI, Tony, R., Sparta, NJ 07871 (US); UPMANN, Arthur, William, Rockton, IL 61072 (US)
(74) Representative: Goodwin, Mark
(86) International application number: PCT/US1998/005030
(87) International publication number: WO 1999/045791

(56) References cited:
- EP-A- 0 729 706
- FR-A- 1 351 643
- FR-A- 2 503 989
- US-A- 4 068 004

## Description

### Technical Field

The invention is directed to an improved system for the continuous process of chewing gum bases.

### Background of the Invention

Typically, a chewing gum composition comprises a water-soluble bulk portion, a water-insoluble chewing gum base portion, and typically water-insoluble flavoring agents. The insoluble gum base generally comprises elastomers, elastomer solvents, plasticizers, waxes, emulsifiers, and inorganic fillers. The water-soluble portion dissipates with a portion of the flavoring agent over a period of time during chewing. The gum base portion is retained in the mouth throughout the time that the product chewed.

Chewing gum bases, as well as the chewing gum product itself, are typically produced by a batch-type method, although continuous extruders can also be used. In the batch method, Sigma blade batch mixers are typically utilized. The batch processing, however, tends to be labor-intensive and produces chewing gums of various consistency.

Once the gum base is formed, emulsifiers, such as lecithin, softeners, such as glycerin or Wesson oil, corn syrup, and bulking agents, such as sugars or sugar alcohols are added to the molten mass. Later flavorings, such as flavor oils and/or spray-dried flavors, and sweeteners are added while mixing is continued until a homogeneous mass is achieved. The chewing gum mass is then cooled and later rolled, scored, and wrapped into the final product.

The use of continuous extruders to make chewing gum bases and the final chewing gum product has been developed in order to simplify and reduce the time required to manufacture the gum base and chewing gum products. Continuous extrusions processes also reduce the cost of the final products and produce chewing gum bases and final gum products of more uniform and consistent quality.

The use of continuous extruders to make a final chewing gum product are shown in U.S. Patent No. 5,135,760 to Degady et al., U.S. Patent No. 5,045,325 to Lesko et al., and U.S. Patent No. 4,555,407 to Kramer et al. The use of continuous extruders to produce chewing gum bases are disclosed, for example, in U.S. Patent Nos. 5,419,919 and 5,486,366, both to Song et al.

The continuous gum base and chewing gum processes disclosed in these patents typically utilize a continuous extrusion machine, such as a twin-screw extruder. These extruders can be co-rotational, counter-rotational, intermeshing or tangential, depending on the requirements and purposes of the system involved. These extruders typically have several different feed inlets where the ingredients are added. The elongated screw mechanisms inside the barrels of the extruders are equipped with different types of elements. Continuous extrusion machines which can be used for producing a chewing gum base or a final chewing gum product, or both, include extruders from Japan Steel Works, Leistriztz, Werner & Pfleiderer Corp., WLS, Buss Mfg. Co., Togum and Baker Perkins.

When gum bases are produced, whether by the batch-type method or with use of a continuous extrusion machine, the molten gum base is typically emptied into coated or lined pans which are then set aside to cool. Once cooled, the slabs or blocks of gum base are set aside or packed into boxes for later use in various chewing gum manufacturing processes. It is well known that a gum base product can be used for several final gum products, depending on the final composition of the chewing gum.

Methods used to handle the gum base products, including the steps of emptying the base into pans, transporting the pans to a cooling station, cooling the hot gum base material in the pans, and processing the cooled slabs of gum base are time-consuming and labor-intensive. Typically, it can take several hours for the gum base product to cool sufficiently for subsequent handling and processing.

FR 2502989 discloses an apparatus and method for cooling and processing a rope or strand of extruded gum material in which the material is passed directly into and through a single cooling drum.

US 4068004 discloses a system and method for cooling of gum base material in which the gum base is deposited in self-releasing polycarbonate trays and is cooled by chilled air forced in contact with the gum base and tray.

EP 0729706 discloses an endless conveyor system for moving trays containing chewing gum material between two points and for returning the empty trays.

FR 1352643 discloses a method and apparatus for cooling bonbons in which the bonbons are placed on a conveyor that ascends a first cooling tower in a spiral and subsequently descends an adjacent cooling tower also in a spiral.

It is the general object of the present invention to provide an improved method and system for the production, cooling, and processing of gum base products. It is also an object of the present invention to provide improved apparatus and methods for cooling a gum base product in order to facilitate improved final processing.

It is still another object of the present invention to provide a cooling apparatus for continuously cooling chewing gum bases and continuously handling them automatically from one stage to another.

These and other objects, benefits, and advantages of the present invention are met by the following description of a preferred embodiment of the invention.

### Summary Of The Invention

In accordance with a first aspect of the invention, there is provided a method for processing chewing gum base materials as defined in claim 1. Further preferred features of this aspect of the invention are set out in claims 2 to 10 dependent on claim 1.

In accordance with a second aspect of the invention, there is provided a system for processing chewing gum base materials as defined in claim 11. Further preferred features of this aspect of the invention are set out in claims 12 to 19 dependant on claim 11.

Other benefits, features, and advantages of the present invention will become apparent from the following description of the invention, when viewed in accordance with the accompanying drawings and appended claims.

### Brief Description Of The Drawings

FIGURE 1 is a schematic diagram of an automatic handling and cooling system in accordance with the present invention;
FIGURE 1A illustrates an alternate embodiment of a portion of the system shown in Figure 1;
FIGURE 2 is a schematic top elevational view of an automatic handling and cooling system in accordance with the present invention;
FIGURE 3 is a flow chart of a preferred embodiment of the invention; and
FIGURE 4 is a schematic diagram of a pan liner mechanism.

### Best Mode(s) For Carrying Out The Invention

The present invention is particularly suitable for processing chewing gum bases which are used for final chewing gum products. In general, the present invention provides an apparatus, method and system for handling, cooling, and further processing of the molten gum base product in order to facilitate its use for a final chewing gum product. In this regard, it is to be understood that the present invention can be used for handling, cooling, and further processing gum base products whether the gum bases are produced by a continuous extrusion process, a conventional batch-type process, or in any other conventional manner.

In the preferred embodiment of the present invention, the invention is utilized with a continuous extrusion-type process for producing the chewing gum base. In particular, for use with a continuous gum base process, the present invention facilitates the handling, cooling, and further processing of the gum base as it is extruded immediately from the extruder.

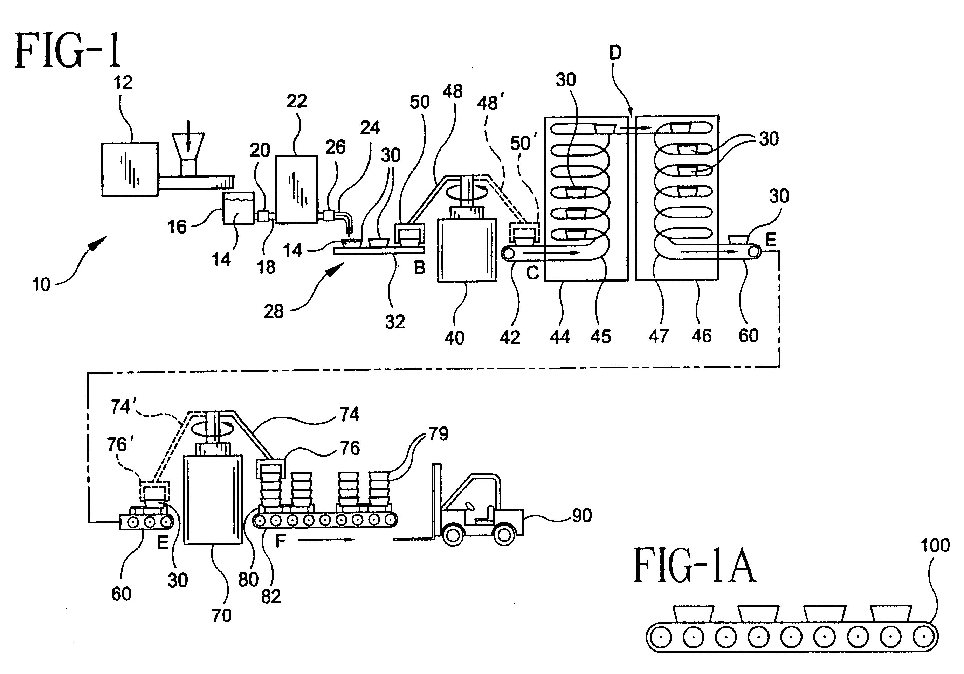

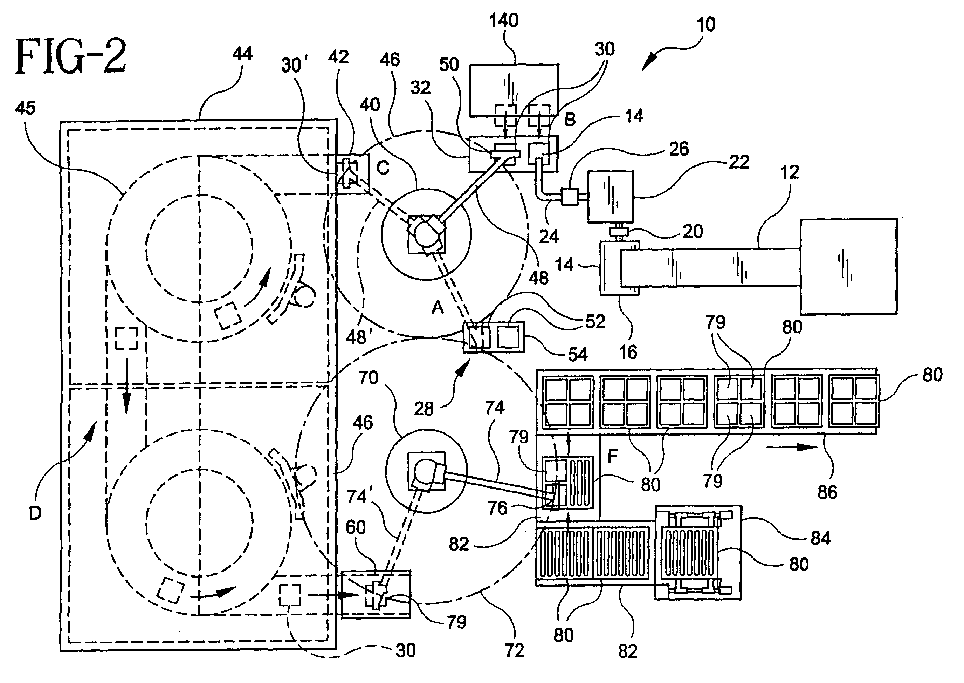

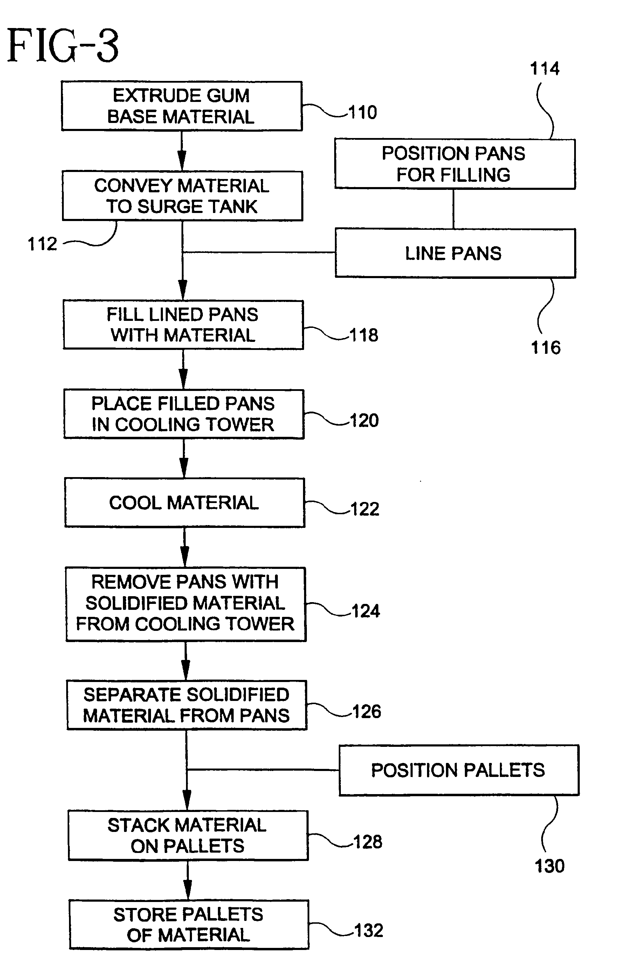

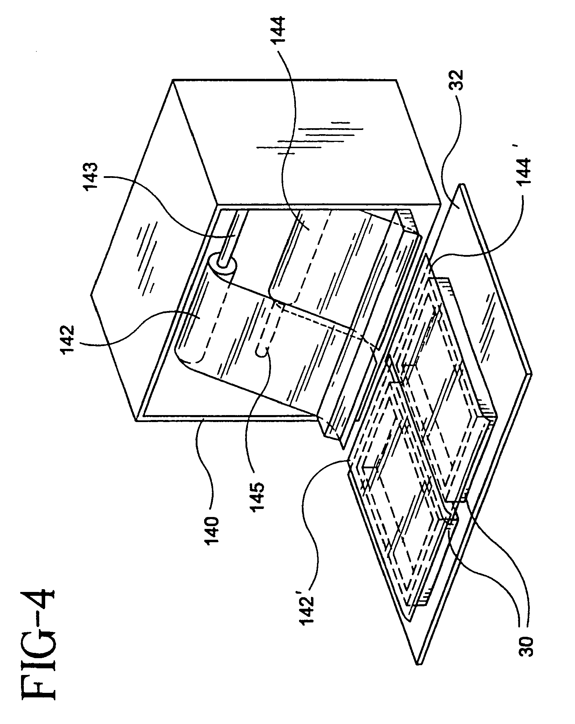

Schematic illustrations of a system in accordance with the present invention are illustrated in Figures 1 and 2, with Figure 1 being a general side elevational view, and Figure 2 being a top elevational view. Figure 1A illustrates an alternate embodiment of a portion of the system. Figure 3 is a flow chart depicting the key steps of a preferred embodiment of the invention and Figure 4 illustrates a pan lining system. In the drawings, the system is generally referred to by the reference numeral 10.

A continuous extruder 12 is used to produce a gum base product 14 which is briefly stored in an accumulator tank 16. The liquid gum base product is pumped through conduit 18 by pump 20 into surge tank 22. The material is then pumped by pump 26 through conduit 24 to a pan filling station, which is generally referred to by the reference numeral 28. The gum base material 14 is placed into lined or coated pans 30 on a platform 32.

It is standard with conventional gum base processes to coat the pans with a powder material, such as talc, or to line the pans with a plastic material, in order to prevent the tacky molten gum base material from sticking to the pans and thus inhibiting or preventing removal once the material has solidified. In accordance with the preferred embodiment of the present invention, the pans are lined with pieces of plastic material, and more preferably, the plastic liners are fed by a feeding mechanism 140 and positioned automatically in the pans by an industrial robot. This is discussed in more detail below with respect to Figure 4.

Individual pans of gum base material 30 are automatically picked up by an industrial robot 40, either individually, or in pairs, and moved to the beginning of conveying mechanism 42 which transports the pans into and through a spiral cooling apparatus 44.

In this regard, and as better shown in Figure 2, the robot 40 has a range of operation 46 which allows its rotating arm 48 to pick up the pans 30 from platform 32 at station "B" and move them to the conveyor 42 at station "C". The arm 48 has a gripping mechanism 50 on one end which allows the robot to manually grip and pick up one or more pans 30. As shown in Figure 1, the robot 40 is in the process of picking up pan 30' at station "B". The position of the robot arm is also shown in phantom lines by reference numerals 48' and 50' in a position to deposit pan 30' on the conveying mechanism 42 at station "C".

Also, in accordance with the present invention, empty pans are provided within the range of operation 46 of the robot 40. Empty pans 52 are shown at station "A" in Figure 2 and are positioned on a table member 54. Thus, in use, robot 40 is controlled to pick up empty pans 52 at station "A" from platform 54, move them into position at station "B" on table or platform 32 where the pans are filled with gum base material 14, and then move the pans to station "C" where they are placed on conveyor 42 for entry into the spiral cooling mechanism 44.

As indicated above, although a continuous extruder 12 is shown in the drawings for manufacture of the chewing gum base 14, it is also understood that the chewing gum base can be made by a conventional batch-type process. With a batch-type process, the molten gum base material could be poured into surge tank 22, and then pumped by pump 26 into separate pans 30 for cooling.

In accordance with the present invention, a pair of spiral coolers 44 and 46 are preferably utilized. As shown, the coolers have spiral-shaped conveying mechanisms 45 and 47, respectively, which transport the pans 30 of gum base material through the towers 44 and 46 as the liquid gum base is cooled.

Spiral belt cooling towers of this type are available from T.J. White Co. Typically, these devices are 20-30 feet in width and several stories in height. The temperature inside the spiral coolers 44 and 46 is preferably kept to a level of approximately 30° to 60°F in order to rapidly cool the material 14. The two spiral conveyors 44 and 46 are positioned adjacent to one another so that the gum base materials can proceed upwardly in the first conveyor on spiral conveyor 45 and be transported to the upper portion of the second conveyor (at point "D") and then proceed downwardly in the second spiral conveyor 47 where it can exit for further handling at the end of conveyor mechanism 60. This is shown as station "E" in the drawings.

When the pans 30 exit from spiral cooler 46, the gum base material is in a solid condition. The time for a pan 30 of liquid gum base material to pass through the spiral coolers 44 and 46, and thus proceed from point "C" to point "E", is approximately 1 to 4 hours.

When the cooled gum base material exits from the spiral conveyor 46 at station "E", it is automatically handled by a second industrial robot 70. Robot 70 has an arc or range of operation 72. The robot 70 has a rotating arm member 74 and a manual hook or grasping mechanism 76 at one end.

Preferred robots for use with the present invention are available from a number of sources, such as Fanuc. In accordance with the present invention, it is also possible to provide one robot to perform the operations of both robots 40 and 70.

Robot 70 picks up one or two pans 30 of cooled and solidified gum base material and moves them into staging area "A" where they are placed on platform or table 54. Suction cups (not shown) on the end of the arm 74 attach to the solidified "blocks" of gum base material and lift then from the pans. The robot 70 then moves the blocks 79 to staging area "F" where they are positioned on pallets 80 which are positioned on conveying mechanism 82. (The empty pans on platform 54 are then moved by robot 40 to staging area "B" where they are reused.)

The pallets 80 are moved into position. A pallet staging mechanism 84 supplies the pallets to the conveying mechanism 82. Once the pallets 80 are filled with a number of the blocks 79 of cooled gum base material, they are passed along the conveying mechanism 82 onto a second pallet conveying and staging mechanism 86. Once the full pallets reach the end 88 of the conveying and handling apparatus mechanism 86, they are picked up for further processing by a high-low mechanism 90 or the like where they are taken for storage or further processing into a final chewing gum product.

An alternative embodiment for handling individual blocks 79 of cooled gum base material is shown in Figure 1A. In this embodiment, the blocks of cooled gum base material are simply placed on a conveyor 100 by the robot 70 where they are subsequently handled and removed individually for further use. In this regard, the cooled gum base blocks could be taken immediately to a final chewing gum processing area and deposited in batch-type mixers or reheated and melted and used in a continuous chewing gum process.

In general, the process in accordance with the present invention includes a gum base manufacturing system or apparatus (either a continuous extruder or batch-type mixer), a pan filling area, one or more industrial robots, one or more cooling towers to cool and harden the liquid gum base material, and a final handling and storage area. One of the industrial robots is used to move the pans of hot gum base material to the entrance of the first spiral tower, and the second industrial robot is used to take the cooled pans of gum base material from the exit of the spiral conveyors to the final staging area. At the final staging area, the pans of cooled gum base material are available to be processed in various ways, such as placed individually on a conveyor, or being loaded on pallets for subsequent handling by vehicles or other machinery.

The flow chart depicted in Figure 3 sets forth the key features of a preferred embodiment of the invention. The gum base material is first extruded 110 and conveyed 112 to a surge tank (22). The pans (30) which are positioned 114 on a loading platform (32), preferably by an industrial robot, and lined 116 with a sheet of plastic material, are filled 118 with the liquid gum base material. The filled pans are placed 120 in the cooling mechanism by the robot and allowed to cool 122. The pans exiting from the cooling mechanism with the solidified gum base material are removed 124 by an industrial robot. The robot then separates 126 the blocks of hardened gum base material from the pans and stacks 128 the blocks on a pallet which earlier had been moved into proper position 130. The filled pallets are then stored 132 so that the gum base material can later be easily used in the manufacture of a final gum product.

Figure 4 shows a feeding mechanism 140 for supplying sheets of plastic material for lining the empty pans. The plastic lining materials is provided in two rolls 142 and 144 of material positioned on shafts 143 and 145, respectively. The material 142 and 144 is fed to a cutting mechanism 146 which cuts the rolled material into individual sheets 142' and 144'. When the empty pans 30 are positioned on platform or table 32, the plastic sheets 142' and 144' are positioned over them. In this regard, the sheets can be pulled from the rolls of material manually, or by robot 40. Once the sheets of material are positioned over the pans, the pans are filled with gum base material. The weight of the material causes the liners to conform to the shape of the pans.

## Claims

1. A method for processing chewing gum base materials comprising the steps of:
producing said gum base material (14) in liquid form by a continuous extrusion processor (12);
depositing said liquid gum base material 14 into a plurality of containers (30);
**characterised in that** the method further comprises:
placing said containers (30) into a cooling mechanism (44,46) for a time and temperature sufficient to cool and solidify said gum base material, said cooling mechanism having a pair of adjacent spiral conveying devices in cooperative operative relationship with each other, a first conveying device (44) transporting said containers in an upward spiral path while being subjected to cooling air and a second conveying device (46) transporting said containers in a downward spiral path while also being subjected to cooling air; and
moving said containers with cooled gum base material from said cooling apparatus to a staging area (E, F).

2. A method as claimed in claim 1, wherein said containers are placed into said cooling mechanism by a robotic mechanism (40).

3. A method as claimed in claim 1 or claim 2, wherein said containers (30) with cooled gum base material are moved from said cooling mechanism to said staging area by a robotic mechanism (70).

4. A method as claimed in any previous claim, further comprising the step of placing said containers with cooled gum base material on pallets (80) in said staging area.

5. A method as claimed in any previous claim, further comprising the step of placing said containers with cooled gum base material on a conveying mechanism (60,82) in said staging area.

6. A method as claimed in any previous claim, further comprising the step of placing a protective lining member (142', 144') in said containers prior to depositing therein of said liquid gum base material.

7. A method as claimed in claim 6, wherein said protective lining material is supplied automatically by at least a feeding mechanism (140) for supplying sheets of plastic material.

8. A method as claimed in any previous claim, further comprising the step of removing said cooled gum base material from said containers by a robotic mechanism (70).

9. A method as claimed in any previous claim, wherein said containers (30) comprise metal pans and are lined with a plastic sheet material (142,144).

10. A method as claimed in any previous claim, wherein said cooled gum base material is removed by vacuum suction from said containers.

11. A system for processing and cooling chewing gum base materials, comprising:
a continuous extruder (12) for producing liquid chewing gum base materials (14);
means (16, 18, 20, 22, 24, 26) for depositing the liquid gum base material produced by the extruder into a plurality of containers (30); **characterised in that** said system further comprises:
a pair of spiral cooling towers (44, 46) positioned adjacent said extruding machine for accepting and cooling containers of said liquid gum base materials and solidifying said gum base materials into blocks (79), said pair of spiral cooling towers comprising a first cooling tower (44) with a first conveying mechanism (45) which transports full containers of gum base material in an upward spiral path while said containers and material therein are being subjected to cooling air, a second cooling tower (46) with a second conveying mechanism (47) which transports said full containers of gum base material in a downward spiral path while said containers and gum base material therein are being subjected to cooling air and means for transporting said full containers of gum base material from said first conveying mechanism to said second conveying mechanism; and
a robotic mechanism (70) for transporting said containers of solidified gum base material from the second cooling tower to a subsequent staging area (A, F).

12. A system as claimed in claim 11, in which the robotic mechanism (70) is configured to remove said blocks of solidified gum base material (79) from said containers (30).

13. A system as claimed in claim 12, in which the robotic mechanism (70) includes suction cups for removing said blocks of solidified gum base material (79) from said containers by vacuum suction.

14. A system as claimed in claim 12 or claim 13, in which the staging area (A, F) includes a conveying mechanism (82) for receiving pallet members onto which the solidified blocks of gum base are placed by the robotic mechanism.

15. A system as claimed in claim 14, comprising a further conveying mechanism (86) for transporting the pallet members from the staging area.

16. A system as claimed in any one of claims 11 to 15, further comprising a robotic mechanism (40) for transporting the containers of liquid gum base material into the first cooling tower (44).

17. A system as claimed in any one of claims 11 to 16, in which a single robotic mechanism (40;70) is arranged to transport the containers of liquid gum base material into the first cooling tower (44) and to transport said containers of solidified gum base material from the second cooling tower (46) to the staging area (A, F).

18. A system as claimed in any one of claims 11 to 17, additionally comprising a plastic sheet feeding mechanism (140) for placing sheets of protective lining material (142, 144) in said containers (30) before said liquid gum base material (14) is deposited therein.

19. A system as claimed in any one of claims 11 to 18, the system comprising a robotic mechanism (70) configured to position empty containers (30) adjacent said depositing means.

## Patentansprüche

1. Verfahren zum Verarbeiten von Kaugummigrundstoffmaterialien mit den Schritten:
Herstellen des Gummigrundstoffmaterials (14) in flüssiger Form durch einen kontinuierlichen Extrusionsverarbeiter (12);
Absetzen des flüssigen Gummigrundstoffmaterials (14) in eine Mehrzahl an Behältern (30);
**dadurch gekennzeichnet,**
**dass** das Verfahren ferner aufweist:
Einsetzen der Behälter (30) in einen Kühlmechanismus (44, 46) für eine Zeit und bei einer Temperatur, die ausreichend sind, um das Gummigrundstoffmaterial (14) zu kühlen und zu verfestigen, wobei der Kühlmechanismus ein Paar benachbarter spiralförmiger Fördervorrichtungen aufweist, die miteinander in einem zusammenwirkenden Betriebsverhältnis stehen, einer erster Fördervorrichtung (44), die die Behälter auf einem aufwärts gerichteten Spiralweg transportiert, während sie Kühlluft aufgesetzt sind, und einer zweiten Fördervorrichtung (46), die die Behälter auf einem abwärts gerichteten Spiralweg transportiert, während auch sie Kühlluft ausgesetzt sind; Bewegen der Behälter mit gekühltem Gummigrundstoffmaterial von dem Kühlgerät zu einem Bereitstellungsbereich (E, F).

2. Verfahren nach Anspruch 1, wobei die Behälter über einen Robotermechanismus (40) in den Kühlmechanismus eingesetzt werden.

3. Verfahren nach Anspruch 1 oder 2, wobei die Behälter (30) mit gekühltem Gummigrundstoffmaterial über einen Robotermechanismus (70) von dem Kühlmechanismus zu dem Bereitstellungsbereich bewegt werden.

4. Verfahren nach einem vorhergehenden Anspruch, ferner mit dem Schritt des Anordnens der Behälter mit gekühltem Gummigrundstoffmaterial auf Paletten (80) in dem Bereitstellungsbereich.

5. Verfahren nach einem vorhergehenden Anspruch, ferner mit dem Schritt des Anordnens der Behälter mit gekühltem Gummigrundstoffmaterial auf einem Fördermechanismus (60, 82) in dem Bereichstellungsbereich.

6. Verfahren nach einem vorhergehenden Anspruch, ferner mit dem Schritt des Einsetzens eines Schutzauskleidungsgliedes (142' 144') in die Behälter, bevor das flüssige Gummigrundstoffmaterial darin abgesetzt wird.

7. Verfahren nach Anspruch 6, wobei das Schutzauskleidungsmaterial automatisch über zumindest einen Fördermechanismus (140) zum Zuführen von Plastikmaterialfolien zugeführt wird.

8. Verfahren nach einem vorhergehenden Anspruch, ferner mit dem Schritt des Entnehmens des gekühlten Gummigrundstoffmaterials von den Behältern über einen Robotermechanismus (70).

9. Verfahren nach einem vorhergehenden Anspruch, wobei die Behälter (30) Metallpfannen aufweisen und mit einem Plastikfolienmaterial (142, 144) ausgekleidet sind.

10. Verfahren nach einem vorhergehenden Anspruch, wobei das gekühlte Gummigrundstoffmaterial durch Vakuumansaugen von den Behältern entnommen wird.

11. System zum Verarbeiten und Kühlen von Kaugummigrundstoffmaterialien mit:
einem kontinuierlichen Extruder (12) zum Herstellen von flüssigen Kaugummigrundstoffmaterialien (14);
Mitteln (16, 18, 20, 22, 24, 26) zum Absetzen des durch einen Extruder hergestellten flüssigen Gummigrundstoffmaterials in eine Mehrzahl an Behältern
**dadurch gekennzeichnet,**
**dass** das System ferner aufweist:
ein Paar spiralförmiger Kühltürme (44, 46), die benachbart zu der Extrusionsmaschine angeordnet sind, zum Aufnehmen und Kühlen von Behältern an flüssigen Gummigrundstoffmaterialien und Verfestigen der Gummigrundstoffmaterialien zu Blöcken (79), wobei das Paar spiralförmiger Kühltürme einen ersten Kühlturm (44) mit einem ersten Fördermechanismus (45), der volle Behälter an Gummigrundstoffmaterial auf einem aufwärts gerichteten Spiralweg transportiert, während die Behälter und darin befindliches Material Kühlluft ausgesetzt sind, einen zweiten Kühlturm (46) mit einem zweiten Fördermechanismus (47), der die vollen Behälter an Gummigrundstoffmaterial auf einem abwärts gerichteten Spiralweg transportiert, während die Behälter und darin befindliches Gummigrundstoffmaterial Kühlluft ausgesetzt sind, und Mittel zum Transportieren der vollen Behälter an Gummigrundstoffmaterial von dem ersten Fördermechanismus zu dem zweiten Fördermechanismus aufweist; und
einem Robotermechanismus (70) zum Transportieren der Behälter an verfestigtem Gummigrundstoffmaterial von dem zweiten Kühlturm zu einem nachfolgenden Bereitstellungsbereich (A, F).

12. System nach Anspruch 11, bei dem der Robotermechanismus (70) ausgelegt ist, um die Blöcke an verfestigtem Gummigrundstoffmaterial (79) von den Behältern (30) zu entnehmen.

13. System nach Anspruch 12, in dem der Robotermechanismus (70) Saugbecher zum Entnehmen der Blöcke an verfestigtem Gummigrundstoffmaterial (79) von den Behältern durch Vakuumansaugen enthält.

14. System nach Anspruch 12 oder 13, in dem der Bereitstellungsbereich (A, F) einen Fördermechanismus (82) zum Aufnehmen von Palettengliedern beinhaltet, auf die die verfestigten Blöcke an Gummigrundstoff durch den Robotermechanismus angeordnet werden.

15. System nach Anspruch 14, mit einem weiteren Fördermechanismus (86) zum Abtransportieren der Palettenglieder von dem Bereitstellungsbereich.

16. System nach einem der Ansprüche 11 bis 15, ferner mit einem Robotermechanismus (40) zum Transportieren der Behälter an flüssigem Gummigrundstoffmaterial in den ersten Kühlturm (44).

17. System nach einem der Ansprüche 11 bis 16, in dem ein einzelner Robotermechanismus (40, 70) angeordnet ist, um die Behälter an flüssigem Gummigrundstoffmaterial in den ersten Kühlturm (44) zu transportieren, und die Behälter an verfestigtem Gummigrundstoffmaterial von dem zweiten Kühlturm (46) zu dem Bereitstellungsbereich (A, F) zu transportieren.

18. System nach einem der Ansprüche 11 bis 17, zusätzlich mit einem Plastikfolienzuführmechanismus (140) zum Einsetzen von Folien an Schutzauskleidungsmaterial (142, 144) in die Behälter (30), bevor das flüssige Gummigrundstoffmaterial (14) darin abgesetzt wird.

19. System nach einem der Ansprüche 11 bis 18, wobei das System einen Robotermechanismus (70) aufweist, der ausgelegt ist, um leere Behälter (30) benachbart zu den Absetzmitteln anzuordnen.

## Revendications

1. Procédé de traitement de matériaux de base de gomme à mâcher, comprenant les étapes consistant à :
produire ledit matériau de base de gomme (14) sous une forme liquide en utilisant un processeur par extrusion en continu (12) ;
verser ledit matériau de base de gomme liquide 14 à l'intérieur d'une pluralité de récipients (30) ;
**caractérisé en ce que** le procédé comprend en outre les étapes consistant à :
disposer lesdits récipients (30) à l'intérieur d'un mécanisme de refroidissement (44, 46) pendant une durée et à une température suffisantes pour refroidir et faire solidifier ledit matériau de base de gomme, ledit mécanisme de refroidissement comprenant une paire de dispositifs de transport en spirale adjacents qui sont dans une relation de mise en prise pour un fonctionnement l'un avec l'autre, un premier dispositif de transport (44) transportant lesdits récipients sur un trajet en spirale vers le haut tout en étant soumis à un refroidissement par air, et un deuxième dispositif de transport (46) transportant lesdits récipients sur un trajet en spirale vers le bas tout en étant lui aussi soumis à un refroidissement par air ; et
déplacer lesdits récipients contenant le matériau de base de gomme refroidi depuis ledit mécanisme de refroidissement vers une zone de stockage (E, F).

2. Procédé selon la revendication 1, dans lequel lesdits récipients sont placé à l'intérieur dudit mécanisme de refroidissement par un mécanisme de robot (40).

3. Procédé selon la revendication 1 ou 2 dans lequel lesdits récipients (30) contenant le matériau de base de gomme refroidi sont déplacés depuis ledit mécanisme de refroidissement vers ladite zone de stockage par un mécanisme de robot (70).

4. Procédé selon l'une quelconque des revendications précédentes, comprenant en outre l'étape consistant à placer lesdits récipients contenant le matériau de base de gomme refroidi sur des palettes (80) à l'intérieur de ladite zone de stockage.

5. Procédé selon l'une quelconque des revendications précédentes, comprenant en outre l'étape consistant à placer lesdits récipients contenant le matériau de base de gomme refroidi sur un mécanisme de transport (60, 82) à l'intérieur de ladite zone de stockage.

6. Procédé selon l'une quelconque des revendications précédentes, comprenant en outre l'étape consistant à placer un élément de garnissage protecteur (142', 144') à l'intérieur desdits récipients avant de verser à l'intérieur de ceux-ci ledit matériau de base de gomme liquide.

7. Procédé selon la revendication 6, dans lequel ledit élément de garnissage protecteur est disposé automatiquement par au moins un mécanisme d'amenée (140) prévu pour fournir des feuilles de matière plastique.

8. Procédé selon l'une quelconque des revendications précédentes, comprenant en outre l'étape consistant à retirer ledit matériau de base de gomme refroidi hors desdits récipients à l'aide d'un mécanisme de robot (70).

9. Procédé selon l'une quelconque des revendications précédentes, dans lequel lesdits récipients (30) comprennent des cuves en métal et sont garnis d'une feuille de matière plastique (142, 144).

10. Procédé selon l'une quelconque des revendications précédentes, dans lequel ledit matériau de base de gomme refroidi est retiré selon un procédé d'aspiration par le vide hors desdits récipients.

11. Système de traitement et de refroidissement de matériaux de base de gomme à mâcher, comprenant :
une extrudeuse en continu (12) pour produire des matériaux de base de gomme à mâcher liquides (14) ;
des moyens (16, 18, 20, 22, 24, 26) pour verser le matériau de base de gomme liquide produit par l'extrudeuse en une pluralité de récipients (30) ; **caractérisé en ce que** ledit système comprend en outre :
une paire de tours de refroidissement en spirale (44, 46) disposée adjacente à ladite machine d'extrusion pour accepter et refroidir des récipients contenant lesdits matériaux de base de gomme liquide et faire solidifier lesdits matériaux de base de gomme liquide en blocs (79), ladite paire de tours de refroidissement en spirale comprenant une première tour de refroidissement (44) pourvue d'un premier mécanisme de transport (45) qui transporte des récipients complets remplis de matériau de base de gomme suivant un trajet en spirale vers le haut tandis que lesdits récipients et ledit matériau qu'ils contiennent sont soumis à un refroidissement par air, une deuxième tour de refroidissement (46) pourvu d'un deuxième mécanisme de transport (47) qui transporte lesdits récipients complets remplis de matériau de base de gomme suivant un trajet en spirale vers le bas tandis que lesdits récipients et ledit matériau qu'ils contiennent sont soumis à un refroidissement par air, et des moyens pour transporter lesdits récipients complets remplis de matériau de base de gomme depuis ledit premier mécanisme de transport vers ledit deuxième mécanisme de transport ; et
un mécanisme de robot (70) pour transporter lesdits récipients de matériau de base de gomme solidifié depuis ladite deuxième tour de refroidissement vers une zone de stockage (A, F) située après.

12. Système selon la revendication 11, dans lequel le mécanisme de robot (70) est configuré de manière à retirer lesdits blocs de matériau de base de gomme solidifié (79) hors desdits récipients (30).

13. Système selon la revendication 12, dans lequel le mécanisme de robot (70) comprend des ventouses en forme de cuvettes pour retirer lesdits blocs de matériau de base de gomme solidifié (79) hors desdits récipients suivant une aspiration par le vide.

14. Système selon la revendication 12 ou 13, dans lequel la zone de stockage (A, F) comprend un mécanisme de transport (82) pour recevoir des éléments de palettes sur lesquels les blocs de matériau de base de gomme solidifié sont placés par le mécanisme de robot.

15. Système selon la revendication 14, comprenant un autre mécanisme de transport (86) pour transporter les éléments de palettes hors de la zone de stockage.

16. Système selon l'une quelconque des revendications 11 à 15, comprenant en outre un mécanisme de robot (40) pour transporter les récipients de matériau de base de gomme liquide à l'intérieur de la première tour de refroidissement (44).

17. Système selon l'une quelconque des revendications 11 à 16, dans lequel un seul mécanisme de robot (40 ;70) est agencé de manière à transporter les récipients de matériau de base de gomme liquide à l'intérieur de la première tour de refroidissement (44) et pour transporter lesdits récipients de matériau de base de gomme solidifié depuis la deuxième tour de refroidissement (46) jusqu'à la zone de stockage (A, F).

18. Système selon l'une quelconque des revendications 11 à 17, comprenant en outre un mécanisme d'amenée (140) de feuilles de matière plastique pour placer des feuilles d'un matériau de garnissage protecteur (142, 144) à l'intérieur desdits récipients (30) avant que ledit liquide matériau de base de gomme (14) ne soit versé dans ceux-ci.

19. Système selon l'une quelconque des revendications 11 à 18, le système comprenant un mécanisme de robot (70) qui est configuré de manière à disposer des récipients vides (30) adjacents aux dits moyens de versage.
